# EUROPÄISCHE PATENTANMELDUNG

(11) **EP 4 741 584 A1**
(43) Veröffentlichungstag der Anmeldung: **13.05.2026**
(21) Anmeldenummer: 25213404.4
(22) Anmeldetag: 04.11.2025
(51) Int. Cl.: E02F 9/20, B60R 25/24, E02F 9/26

(54) **ARBEITSMASCHINE UND VERFAHREN**

(30) Priorität: 06.11.2024 DE 102024132343
(71) Anmelder: Liebherr-Werk Bischofshofen GmbH, 5500 Bischofshofen (AT)
(72) Erfinder: HETTEGGER, Mario, 5611 Grossarl (AT); ZEISEL, Michael, 95679 Waldershof (DE)
(74) Vertreter: Lorenz Seidler Gossel Part. mbB

(57) **Zusammenfassung**

Die vorliegende Erfindung betrifft eine Arbeitsmaschine mit einer Maschinensteuerung, die eine oder mehrere Steuerungskomponenten aufweist und einer Arbeitsmaschinenelektrik, die eine oder mehrere Elektrik- und/oder Elektronikkomponenten aufweist, wobei Hauptsteuermittel vorgesehen sind, die derart ausgebildet sind, um mindestens eine der Steuerungskomponenten und/oder mindestens eine der Elektrik- und/oder Elektronikkomponenten ansteuern, mit elektrischer Leistung versorgen und/oder aktivieren zu können, wobei Aktivierungsmittel vorgesehen sind, die derart ausgebildet sind, um mindestens eine der Steuerungskomponenten aktivieren zu können.

## Beschreibung

Die vorliegende Erfindung betrifft eine Arbeitsmaschine mit einer Maschinensteuerung, die eine oder mehrere Steuerungskomponenten aufweist und einer Arbeitsmaschinenelektrik, die eine oder mehrere Elektrik- und/oder Elektronikkomponenten aufweist, wobei Hauptsteuermittel vorgesehen sind, die derart ausgebildet sind, um mindestens eine der Steuerungskomponenten und/oder mindestens eine der Elektrik- und/oder Elektronikkomponenten ansteuern, mit elektrischer Leistung versorgen und/oder aktivieren zu können.

Gemäß dem Stand der Technik wird eine Arbeitsmaschine durch Betätigen eines Zündschlosses mit einem Zündschlüssel oder eines Start-/Stopp-Tasters durch einen Bediener in Betrieb genommen. Dabei werden alle Komponenten der Arbeitsmaschine aktiviert und/oder hochgefahren. Dies bedeutet z.B., dass sowohl die Maschinensteuerung der Arbeitsmaschine als auch die Arbeitsmaschinenelektrik der Arbeitsmaschine mit elektrischer Leistung versorgt werden.

Es ist bekannt, dass die Maschinensteuerung eine Mastereinheit und/oder eine Recheneinheit und mit der Mastereinheit und/oder der Recheneinheit bspw. über einen CAN-Bus verbundene, für die Inbetriebnahme der Arbeitsmaschine essenzielle Steuerungskomponenten, wie bspw. Input-/Output-Module, eine Motorsteuerung, eine Lenkungssteuerung, , bspw. eine Notlenkpumpensteuerung, einen Joystick, eine Tastatur, ein Maschinendisplay etc., aufweisen kann oder dass die Maschinesteuerung zusammen mit der Arbeitsmaschinenelektrik ausgebildet ist.

In beiden Ausführungen kommunizieren gewisse Steuerungskomponenten der Arbeitsmaschine mit der Mastereinheit und/oder Recheneinheit erst dann, wenn in der Maschinensteuerung für alle für die Inbetriebnahme essenziellen Steuerungskomponenten eine Freigabe vorliegt, also nachdem die Maschinensteuerung komplett hochgefahren ist, wobei dem Bediener anschließend die Inbetriebnahme der Arbeitsmaschine freigegeben wird. Der Bediener kann die Arbeitsmaschine also erst nach dem Hochfahren der Maschinensteuerung in Betrieb nehmen.

Das Hochfahren der Maschinensteuerung benötigt eine gewisse Zeit. Dabei wird die Zeit zum Hochfahren der Maschinensteuerung im Wesentlich durch diejenige Steuerungskomponente bestimmt, die die längste Zeit zum Hochfahren benötigt.

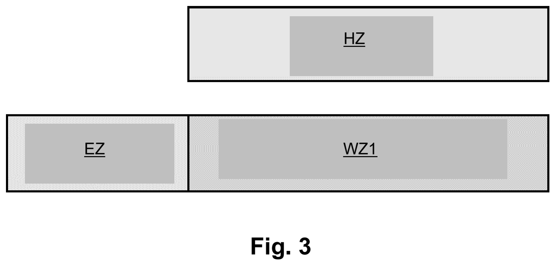

In Fig. 3 ist ein typischer zeitlicher Ablauf für ein Hochfahren der Maschinensteuerung dargestellt. In dem unteren Zeitstrahl erfolgt während der Zeit EZ ein Einsteigen des Bedieners in die Arbeitsmaschine und ein Betätigen des Zündschlosses oder des Start-/Stopp-Tasters der Arbeitsmaschine. Dies aktiviert die Maschinensteuerung und setzt das Hochfahren der Maschinensteuerung mit der Dauer der Hochfahrzeit HZ, die in dem oberen Zeitstrahl in Fig. 3 dargestellt ist, in Gang. Während der Hochfahrzeit HZ kann der Bediener die Arbeitsmaschine nicht bedienen und wartet daher mit der Wartezeit WZ1, die mindestens der Hochfahrzeit HZ entspricht. Erst nach Ablauf der Hochfahrzeit HZ bzw. Wartezeit WZ1 kann der Bediener die Arbeitsmaschine in Betrieb nehmen.

Es ist aus dem Stand der Technik bekannt eine Wartezeit bis zur Inbetriebnahme eines mit einem Dieselmotor betriebenen Fahrzeugs durch Vorverlegung des Beginns eines Vorglühvorgangs des Dieselmotors zu verkürzen. Schon beim Öffnen der Fahrertür des Fahrzeugs wird der Vorglühvorgang begonnen, bspw. wenn die Kühlmitteltemperatur unter 65 °C liegt. Die Vorglühanzeige des Fahrzeugs leuchtet aber erst nach Einschalten der Zündung des Fahrzeugs und leuchtet demnach nur für die Dauer der verbleibenden Restglühzeit. Die Wartezeit des Fahrers nach Einnahme der Sitzposition und Betätigen der Zündung bis zum Erlöschen der Vorglühanzeige wird also um die Zeit, die er nach dem Öffnen der Fahrertür bis zur Einnahme der Sitzposition benötigt, verkürzt.

Der Stand der Technik weist allerdings unter anderem die Nachteile auf, dass eine Änderung des oben dargelegten Ablaufs nicht möglich ist und nur die Glühzeit parallel zu dem Einsteigevorgang abläuft. Übertragen auf eine Arbeitsmaschine würde das Hochfahren der Steuerungskomponenten dennoch eine Wartezeit bedingen, wie oben dargelegt.

Vor diesem Hintergrund liegt der vorliegenden Erfindung die Aufgabe zugrunde, eine oben genannte Arbeitsmaschine, insbesondere im Hinblick auf eine Verkürzung der Dauer der Inbetriebnahme der Arbeitsmaschine, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass Aktivierungsmittel vorgesehen sind, die derart ausgebildet sind, um mindestens eine der Steuerungskomponenten aktivieren zu können.

Vorzugsweise ist vorgesehen, dass mindestens die für die Inbetriebnahme der Arbeitsmaschinen essenziellen Steuerungskomponenten der Maschinensteuerung oder die gesamte Maschinensteuerung durch die Aktivierungsmittel aktiviert und/oder hochgefahren werden können. Die für die Inbetriebnahme der Arbeitsmaschinen essenziellen Steuerungskomponenten sind vorzugsweise eine oder mehrere der folgenden Steuerungskomponenten: Mastereinheit; Peripheriesteuerung; Input-/Output-Modul; Joystick; Tastatur; Motorsteuerung; Display; insbesondere ein Maschinendisplay; Lenkungssteuerung.

Die Zeit für das Hochfahren von Steuerungskomponenten der Maschinensteuerung, also die Zeit, die benötigt wird, bis die Maschinensteuerung die Inbetriebnahme der Arbeitsmaschine freigibt, kann mindestens teilweise eine Wartezeit für den Bediener der Arbeitsmaschine darstellen. Vorzugsweise ist vorgesehen, die Wartezeit für den Bediener, insbesondere nachdem der Bediener den Bedienplatz der Arbeitsmaschine eingenommen hat, bis zur Freigabe der Inbetriebnahme der Arbeitsmaschine durch die Maschinensteuerung zu verkürzen. Das Hochfahren kann auch als Booten bezeichnet werden.

Vorzugsweise wird durch eine frühzeitige Aktivierung mindestens einer Steuerungskomponente der Maschinensteuerung die Zeit für das Hochfahren der Maschinensteuerung für den Bediener gefühlt verkürzt. Vorzugsweise erfolgt die Aktivierung mindestens einer Steuerungskomponente der Maschinensteuerung, insbesondere durch ein Signal der Aktivierungsmittel, woraufhin mindestens eine Steuerungskomponente und insbesondere die für die Inbetriebnahme der Arbeitsmaschine essenziellen Steuerungskomponenten der Maschinensteuerung hochgefahren werden, bereits bevor der Bediener den Bedienplatz der Arbeitsmaschine, also in anderen Worten seinen Arbeitsplatz, bspw. in Form eines Fahrersitzes, eingenommen hat und/oder das Zündschloss mit einem Zündschlüssel oder den Start-/Stopp-Taster betätigt. Der Bediener kann auch der Fahrer der Arbeitsmaschine sein, sofern die Arbeitsmaschine fahren kann.

In anderen Worten ist vorzugsweise vorgesehen, dass von dem Bediener nicht die gesamte Hochfahrzeit der Maschinensteuerung auf dem Bedienplatz abgewartet wird, sondern nur mehr ein Teil der Hochfahrzeit, sodass sich für den Bediener gefühlt eine verkürzte Hochfahrzeit ergibt.

Vorzugsweise ist vorgesehen, dass die Aktivierungsmittel, eine Aktivierungssteuerung, einen Türkontaktschalter, Mittel zur Überwachung der Umgebung der Arbeitsmaschine, einen Aktivierungsschalter, eine Fernsteuerung und/oder eine Fernbedienung, insbesondere eine Fernbedienung, die zu einer Öffnung einer Tür der Arbeitsmaschine ausgebildet ist, umfassen.

Denkbar ist, dass ein Aktivierungsschalter, bspw. in Form eines Ein-Aus-Schalters an der Arbeitsmaschine von außen zugänglich, beispielsweise in der Nähe der Tür, angeordnet ist, wobei die Aktivierung mindestens einer Steuerungskomponente oder mindestens die für die Inbetriebnahme der Arbeitsmaschinen essenziellen Steuerungskomponenten der Maschinensteuerung durch den Aktivierungsschalter erfolgen kann. Denkbar ist, dass der Aktivierungsschalter Mittel aufweist, die das Betätigen des Aktivierungsschalters durch unbefugte Personen ausschließt. Zum Betätigen des Aktivierungsschalters kann z.B. eine Identifikation mit einer Smartkey/Funkschlüssel-Fernbedienung für die Maschinensteuerung oder mit einem Fingerabdruck erforderlich sein.

Ein die frühzeitige Aktivierung mindestens einer Steuerungskomponente auslösendes Signal kann besonders bevorzugt durch einen Türkontaktschalter, der beim Öffnen einer Tür der Arbeitsmaschine ein Signal ausgibt und/oder durch eine Fernbedienung, insbesondere eine Smartkey-Fernbedienung, die ein Öffnen oder Aufsperren einer Tür der Arbeitsmaschine über Funk ermöglicht, erfolgen.

Vorzugsweise ist vorgesehen, dass mindestens eine Steuerungskomponente über eine Fernsteuerung oder eine Remote-Control aktiviert werden kann. Dabei kann das Aktivieren mindestens einer Steuerungskomponente durch den Bediener selbst durch die Fernsteuerung ausgelöst werden. Vorzugsweise ist vorgesehen, dass z.B. nach einer Einsatzanforderung für die Arbeitsmaschine überprüft wird, ob die Maschinensteuerung, insbesondere für die Inbetriebnahme der Arbeitsmaschinen essenziellen Steuerungskomponenten, der Arbeitsmaschine hochgefahren ist. Sofern keine oder nicht alle für die Inbetriebnahme der Arbeitsmaschinen essenziellen Steuerungskomponenten hochgefahren sind, erfolgt eine Signaleingabe zum Aktivieren mindestens der für die Inbetriebnahme der Arbeitsmaschinen essenziellen Steuerungskomponenten direkt an die Maschinensteuerung, sodass zum Eintreffen des Bedieners die für die Inbetriebnahme der Arbeitsmaschinen essenziellen Steuerungskomponenten der Maschinensteuerung bereits hochgefahren sind, insbesondere ohne dass der Bediener in die Arbeitsmaschine eingestiegen ist.

Vorzugsweise ist vorgesehen, dass die Aktivierungsmittel eine Umgebungsüberwachung der Arbeitsmaschine oder Mittel zur Überwachung der Umgebung der Arbeitsmaschine umfassen oder darstellen.

Vorzugsweise ist vorgesehen, dass die Aktivierungsmittel einen Funk oder Funkmittel umfassen.

Vorzugsweise ist vorgesehen, dass die Hauptsteuermittel ein Zündschloss einen Taster, insbesondere einen Start-Stopp-Taster und/oder eine Fernsteuerung, umfassen.

Vorzugsweise ist vorgesehen, dass die Maschinensteuerung als Steuerungskomponenten eine Mastereinheit, eine Peripheriesteuerung, ein Input-/Output-Modul, ein Bedienelement, insbesondere einen Joystick, eine Tastatur, eine Motorsteuerung, ein Display, insbesondere ein Maschinendisplay und/oder eine Lenkungssteuerung aufweist.

Vorzugsweise ist vorgesehen, dass die Arbeitsmaschinenelektrik als Elektrik-und/oder Elektronikkomponenten eine Spannungsversorgung für Sensoren und/oder Aktoren, einen Scheinwerfer, eine Kabinenheizung, ein Kabinengebläse, einen Scheibenwischer, einen Zigarettenanzünder, eine Hupe, einen Sitzkompressor, eine Heckscheibenheizung, eine Zentralschmieranlage und/oder eine Rückfahrkamera aufweist.

Besonders bevorzugt ist vorgesehen, dass die Hauptsteuermittel und/oder die Aktivierungsmittel derart ausgebildet sind, dass nach einem Ausschaltbefehl zum Beenden der Ansteuerung und/oder Versorgung mit elektrischer Leistung von Komponenten durch die Hauptsteuermittel oder einem Deaktivieren der Hauptsteuermittel entweder für ein einmaliges Öffnen und Schließen des Türkontakts und/oder für eine Zeitdauer, vorzugsweise von unter 10 Minuten, insbesondere von 1 bis 10 Minuten, vorzugsweise 5 Minuten, einen inaktiven Betriebszustand einnehmen, bei dem die Aktivierungsmittel keine Komponenten aktivieren können.

Denkbar ist es, dass nach dem Abschalten die Aktivierungsmittel entweder für einen Türöffnungszyklus (Öffnen und Schließen) oder für eine Zeitdauer inaktiv bleiben. Wenn die Tür zum Aussteigen geöffnet und dann geschlossen wird, sind die Aktivierungsmittel in diesem Fall wieder scharf gestellt.

Vorzugsweise ist vorgesehen, dass die Aktivierungsmittel, insbesondere die Aktivierungssteuerung, derart ausgebildet sind, dass durch die Aktivierungsmittel aktivierte und/oder hochgefahrene Komponenten nach Ablauf einer Zeitdauer, insbesondere von 5 bis 15 Minuten, vorzugsweise 5 Minuten, deaktiviert werden, wenn innerhalb dieser Zeitdauer keine Ansteuerung und/oder Versorgung mit elektrischer Leistung dieser Komponenten durch die Hauptsteuermittel erfolgt.

Vorzugsweise ist vorgesehen, dass die Hauptsteuermittel und/oder die Aktivierungsmittel derart ausgebildet sind, dass nach einem Ausschaltbefehl zum Beenden der Ansteuerung und/oder Versorgung mit elektrischer Leistung von Komponenten durch die Hauptsteuermittel oder einem Deaktivieren der Hauptsteuermittel das Ausschalten mindestens einer Steuerungskomponente oder der Maschinensteuerung erst nachdem ein Bediener und/oder eine Smartkey-Fernbedienung einen definierten Bereich um die Arbeitsmaschine herum verlassen hat, erfolgt

Vorzugsweise ist vorgesehen, dass mindestens die für die Inbetriebnahme der Arbeitsmaschinen essenziellen Steuerungskomponenten der Maschinensteuerung oder die gesamte Maschinensteuerung so lange eingeschaltet oder aktiv, also bspw. im Zustand "ON" bleiben, solange sich der Bediener und/oder die Smartkey-Fernbedienung für die Arbeitsmaschine innerhalb dieses definierten Bereichs um die Arbeitsmaschine herum befindet. Vorzugsweise ist vorgesehen, dass die Ausführung eines durch den Bediener vorgenommenen Ausschaltbefehls für das Ausschalten der Maschinensteuerung und/oder der Arbeitsmaschinenelektrik, der bspw. mittels des Zündschlosses bzw. des Zündschlüssels erfolgen kann zumindest hinsichtlich der Maschinensteuerung so lange verzögert bzw. erst dann vorgenommen wird, wenn der Bediener und/oder die Smartkey-Fernbedienung für die Arbeitsmaschine den definierten Bereich um die Arbeitsmaschine herum verlassen hat.

Dies kann bspw. vorteilhaft sein, wenn kurz nach dem Ausschaltbefehl, insbesondere mittels des Zündschlosses bzw. des Zündschlüssels, eine sofortige Wiederinbetriebnahme der Arbeitsmaschine durchzuführen ist, weil der Bediener bspw. umparken und/oder weiterarbeiten will. Die Maschinensteuerung bleibt vorzugsweise so lange eingeschaltet oder aktiv, also bspw. im Zustand "ON", so lange sich der Bediener und/oder die Smartkey-Fernbedienung für die Arbeitsmaschine in dem definierten Bereich um die Arbeitsmaschine herum, der auch die Arbeitsmaschine einschließt, befindet.

Vorzugsweise ist vorgesehen, dass die die Aktivierungsmittel derart ausgebildet sind, um mindestens eine der Steuerungskomponenten und/oder mindestens eine der Elektrik- und/oder Elektronikkomponenten mit elektrischer Leistung versorgen zu können.

Vorzugsweise ist vorgesehen, dass die Aktivierungsmittel derart ausgebildet sind, um mindestens eine der Elektrik- und/oder Elektronikkomponenten aktivieren zu können.

Vorzugsweise ist vorgesehen, dass die Arbeitsmaschine eine Erdbewegungsmaschine, insbesondere ein Radlader, ist.

Die Erfindung betrifft auch ein Verfahren zur Inbetriebnahme einer, insbesondere erfindungsgemäßen, Arbeitsmaschine, wobei eine Aktivierung mindestens einer der Steuerungskomponenten durch Aktivierungsmittel erfolgt und/oder anschließend eine Ansteuerung und/oder Versorgung mit elektrischer Leistung mindestens einer der Steuerungskomponenten und/oder mindestens einer der Elektrik- und/oder Elektronikkomponenten durch Hauptsteuermittel erfolgt.

Nach einer Aktivierung einer Komponente erfolgt vorzugsweise ein Hochfahren der Komponente oder die Komponente wird abhängig von der Ausbildung der Komponente ohne ein Hochfahren aktiv. Die Steuerungskomponenten und die Elektrik-und/oder Elektronikkomponenten können jeweils als Komponenten bezeichnet werden.

Vorzugsweise ist vorgesehen, dass eine Aktivierung einer Mastereinheit, einer Peripheriesteuerung, eines Input-/Output-Moduls, eines Bedienelements, insbesondere eines Joysticks, einer Tastatur, einer Motorsteuerung, eines Displays, insbesondere eines Maschinendisplays und/oder einer Lenkungssteuerung erfolgt.

Vorzugsweise ist vorgesehen, dass die Aktivierung durch ein Öffnen einer Tür und/oder eines Bewegens eines Bedieners oder einer Smartkey-Fernbedienung in einen definierten Bereich um die Arbeitsmaschine herum ausgelöst wird.

Vorzugsweise ist vorgesehen, dass, sobald sich der Bediener und/oder eine Smartkey-Fernbedienung für die Arbeitsmaschine innerhalb eines definierten Bereichs um die Arbeitsmaschine herum befinden, mindestens die für die Inbetriebnahme der Arbeitsmaschinen essenziellen Steuerungskomponenten der Maschinensteuerung aktiviert und sodann hochgefahren werden.

Die Maschinensteuerung kann mit der Arbeitsmaschinenelektrik einteilig ausgebildet sein. Die Aktivierungsmittel können derart ausgebildet sein, dass die gesamte Maschinensteuerung und die gesamte Arbeitsmaschinenelektrik aktiviert werden können. Nach einer entsprechenden Aktivierung durch die Aktivierungsmittel fahren in dieser Ausführung vorzugsweise mehr oder weniger sämtliche an der Arbeitsmaschine vorhandene Komponenten hoch bzw. werden aktiv. Dies umfasst vorzugsweise auch die leistungsintensiven Komponenten, wobei, da zu dem Zeitpunkt der frühzeitigen Aktivierung der Dieselmotor der Arbeitsmaschine noch nicht läuft, die Leistungsversorgung der Komponenten vorzugsweise über die Batterie der Arbeitsmaschine erfolgt.

Vorzugsweise ist vorgesehen, dass jede Steuerungskomponente und jede Elektrik-und/oder Elektronikkomponente unabhängig voneinander aktiviert werden kann.

Vorzugsweise ist vorgesehen, dass die Maschinensteuerung und die Arbeitsmaschinenelektrik unabhängig voneinander aktiviert werden können. Vorzugsweise ist vorgesehen, dass zunächst nur die für die Inbetriebnahme der Arbeitsmaschinen essenziellen Steuerungskomponenten, wie bspw. die Mastereinheit, aktiviert und dann hochgefahren werden und danach die verbleibenden Steuerungskomponenten und die Elektrik- und/oder Elektronikkomponenten der Arbeitsmaschinenelektrik, bspw. nach Betätigen des Zündschlosses, aktiviert und/oder mit elektrischer Leistung versorgt werden.

Denkbar ist ein Verfahren zur Inbetriebnahme einer Arbeitsmaschine, insbesondere Erdbewegungsmaschine, mit einer Maschinensteuerung, einer Arbeitsmaschinenelektrik sowie mit Hauptsteuermitteln, wobei die Maschinensteuerung und/oder die Arbeitsmaschinenelektrik mittels der Hauptsteuermittel aktiviert oder in einen Betriebszustand versetzt werden, wobei zumindest die Maschinensteuerung mittels von den Hauptsteuermitteln verschiedenen Aktivierungsmittel aktiviert oder in einen Betriebszustand versetzt wird.

Vorzugsweise ist vorgesehen, dass ein Aufwecken der Arbeitsmaschine, also bspw. ein "Machine Wake-Up" durch die Aktivierungsmittel erfolgt.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine schematische Darstellung eines zeitlichen Ablaufs einer Ausführungsform eines erfindungsgemäßen Verfahrens mittels Zeitstrahlen.
- Fig. 2:: einen Schaltplan einer Ausführungsform einer erfindungsgemäßen Arbeitsmaschine.
- Fig. 3:: eine schematische Darstellung eines zeitlichen Ablaufs einer Ausführungsform eines Verfahrens aus dem Stand der Technik mittels Zeitstrahlen.

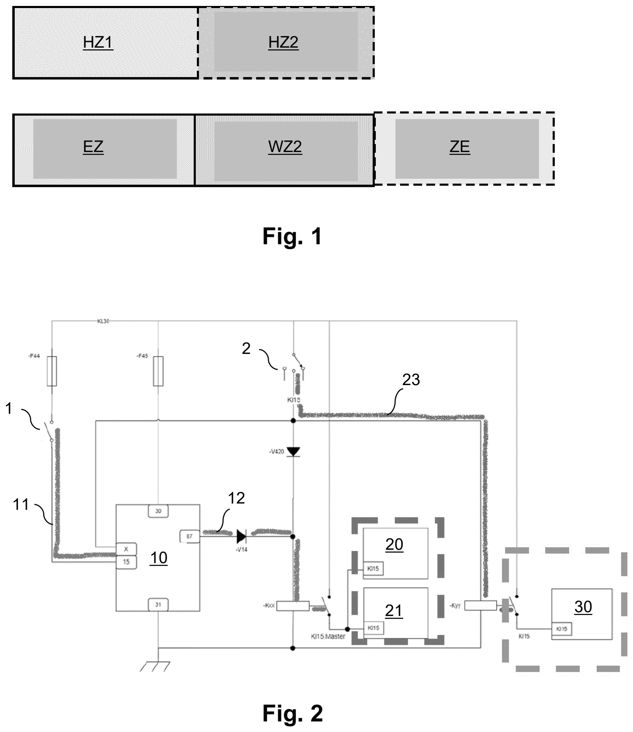

In dem unteren Zeitstrahl in Fig. 1 erfolgt während der Zeit EZ ein Einsteigen des Bedieners in die Arbeitsmaschine, wobei vor oder zu Beginn des Einsteigens durch die Aktivierungsmittel ein Aktivieren und darauffolgendes Hochfahren der Maschinensteuerung für die Inbetriebnahme der Arbeitsmaschine erfolgt. Bspw. weisen die Aktivierungsmittel einen Türkontaktschalter auf, bei dessen Betätigung durch Öffnen der Tür eine Aktivierungssteuerung der Aktivierungsmittel aktiv wird und die Maschinensteuerung aktiviert.

Damit beginnt schon beim Einsteigen des Bedieners der erste Teil der Hochfahrzeit HZ1, wie dies in dem oberen Zeitstrahl in Fig. 1 dargestellt ist. Der Bediener nimmt sodann seinen Bedienplatz an der Arbeitsmaschine ein und wartet mit der Dauer der Wartezeit WZ2, die dem zweiten Teil der Hochfahrzeit HZ2 entspricht, wie dies in den beiden Zeitstrahlen in Fig. 1 dargestellt ist.

Die gesamte Hochfahrzeit setzt sich aus der Summe der Teile HZ1 und HZ2 zusammen. Diese Summe ist gleich groß wie die Hochfahrzeit HZ aus dem Stand der Technik bzw. Fig. 3. Dadurch, dass der erste Teil der Hochfahrzeit HZ1 schon beim oder vor dem Einsteigen des Bedieners beginnt, ergibt sich eine verringerte Wartezeit WZ2 gegenüber der Wartezeit WZ1 aus dem Stand der Technik. Es kommt somit zu einer Zeitersparnis ZE, die im Wesentlichen der Hochfahrzeit HZ1 entspricht.

Nach Ablauf der Wartezeit WZ2 kann ein Betätigen des Zündschlosses oder des Start-/Stopp-Tasters der Arbeitsmaschine erfolgen, womit die während des Hochfahrens noch nicht mit elektrischer Leistung versorgten Komponenten der Maschinensteuerung und der Arbeitsmaschinenelektrik durch die Hauptsteuermittel ebenfalls mit elektrischer Leistung versorgt werden.

Die Aktivierung der Maschinensteuerung, bspw. ein Aufwachen der Arbeitsmaschine bzw. der Maschinensteuerung kann über einen Türkontaktschalter oder eine Smartkey-Fernbedienung ausgelöst werden.

In Fig. 2 ist ein Türkontaktschalter 1 oder ein Schalter, der manuell oder bspw. über eine Smartkey/Funkschlüssel-Fernbedienung, betätigt werden kann mit einer Aktivierungssteuerung 10 über einen ersten Signalweg 11 verbunden. Die Aktivierungssteuerung 10 ist über einen zweiten Signalweg 12 mit der Maschinensteuerung, die eine Mastereinheit 20 und eine Peripheriesteuerung 21 aufweist, verbunden.

Bei einem Betätigen des Türkontaktschalters 1 wird somit ein Signal über den Signalweg 11 an die Aktivierungssteuerung 10 gesendet und die Aktivierungssteuerung 10 kann über den Signalweg 12 die Maschinensteuerung aktivieren.

In Fig. 2 ist ferner ein Zündschloss 2, das über einen dritten Signalweg 23 mit der Arbeitsmaschinenelektrik 30 verbunden ist.

Die Signalwege 11, 12 und 23 sind in Fig. 2 über dicke Linien symbolisiert dargestellt.

Das Zündschloss 2 ist ebenfalls über einen nicht durch eine symbolische Linie dargestellten Signalweg mit der Maschinensteuerung verbunden.

Durch den Türkontaktschalter 1 aber auch über das Zündschloss 2 kann somit die Maschinensteuerung aktiviert werden. Insbesondere werden nur die für die Inbetriebnahme der Arbeitsmaschine essenziellen Steuerungskomponenten aktiviert.

Über das Zündschloss 2 kann die Arbeitsmaschinenelektrik 30 aktiviert und/oder mit Leistung versorgt werden. Beim Betätigen des Zündschlosses 2 kann somit ein Zuschalten der Arbeitsmaschinenelektrik 30 erfolgen.

In einem Ausführungsbeispiel öffnet der Bediener zunächst die Tür zur Kabine der Arbeitsmaschine.

Die Mastereinheit 20 und die Peripheriesteuerung 21 der Maschinensteuerung werden sodann direkt über den Türkontaktschalter 1 aktiviert.

Wenn nicht innerhalb einer Zeitdauer von z.B. 5 Minuten das Zündschloss 2 betätigt wird, werden die Mastereinheit 20 und die Peripheriesteuerung 21 wieder deaktiviert oder abgeschaltet. Bspw. kann dadurch ein Energiesparen erfolgen, bspw. wenn der Bediener die Tür nur kurz geöffnet hat, aber nicht in die Arbeitsmaschine eingestiegen ist.

Wenn innerhalb der Zeitdauer von z.B. 5 Minuten das Zündschloss 2 betätigt wird, wird auch die Arbeitsmaschinenelektrik 30 aktiviert und/oder mit elektrischer Leistung versorgt.

Sofern der Bediener das Zündschloss 2 betätigt, um die Arbeitsmaschine abzuschalten sollte beim Öffnen der Tür zum Aussteigen des Bedieners keine erneute Aktivierung der Maschinensteuerung erfolgen. Der Bediener will in diesem Fall aussteigen und die Arbeitsmaschine verlassen. Dazu ist in dem Ausführungsbeispiel vorgesehen, dass immer nach Betätigen des Zündschlosses 2 zum Ausschalten der Arbeitsmaschine der Türkontaktschalter 1 bzw. das Öffnen der Tür für eine gewisse Zeitdauer, z.B. 5 Minuten, ignoriert wird, sodass während dieser Zeit keine Aktivierung durch die Aktivierungsmittel erfolgt. Diese Funktion wird über die Aktivierungssteuerung 10 realisiert. Es kann auch vorgesehen sein, dass der Türkontaktschalter 1 genau für einen Türöffnungs-/Türschliesszuklus ignoriert wird, das heißt in anderen Worten, dass nach einmaligem Öffnen und Schließen der Tür beim Aussteigen der Türkontaktschalter 1 wieder scharf gestellt ist.

Alternativ oder zusätzlich zum Zündschloss 2 kann die Arbeitsmaschine einen Start-Stopp-Taster aufweisen.

Alternativ oder zusätzlich zum Zündschloss 2 und/oder zum Start-Stopp-Taster kann eine andere Vorrichtung oder Einheit für das Inbetriebnehmen der gesamten Arbeitsmaschine vorgesehen sein, wie z.B. eine Fernsteuerung/Autonomie, eine Remote-Control-ECU und/oder ein Telematiksystem, bspw. eine Liebherr Telematik Unit (LITU).

Denkbar ist auch, dass die Arbeitsmaschine keine Aktivierungssteuerung 10 aufweist und/oder der Türkontaktschalter 1 direkt mit der Maschinensteuerung verbunden ist. Dabei kann es möglich sein, dass bei offener Tür die Maschinensteuerung nie ausgeschaltet wird.

Alternativ oder zusätzlich zum Türkontaktschalter 1 kann die Aktivierung der Maschinensteuerung durch ein Signal von einer Smartkey-Fernbedienung ausgelöst werden.

Die Maschinensteuerung weist vorzugsweise eine oder mehrere der folgenden Steuerungskomponenten auf:
- Mastereinheit (Zentralsteuerung) und mit dieser über CAN-Bus kommunizierende Peripheriesteuerung;
- Input-/Output-Module;
- Bedienelement, insbesondere Joystick;
- Tastatur;
- Motorsteuerung (ECU);
- Maschinendisplay;
- Lenkungssteuerung (ECU)/Notlenkpumpensteuerung.

Die Arbeitsmaschinenelektrik weist vorzugsweise eine oder mehrere der folgenden Elektrik- und/oder Elektronikkomponenten auf:
- Spannungsversorgung für Sensoren und/oder Aktoren;
- Scheinwerfer;
- Kabinenheizung und/oder -gebläse;
- Scheibenwischer;
- Zigarettenanzünder;
- Hupe;
- Sitzkompressor;
- Heckscheibenheizung;
- Zentralschmieranlage;
- Rückfahrkamera.

Diese Aufzählungen sind beispielhaft. Denkbar ist, dass auch Steuerungskomponenten der Maschinensteuerung erst zusammen mit Elektrik- und/oder Elektronikkomponenten der Arbeitsmaschinenelektrik aktiviert und/oder hochgefahren werden. Vorzugsweise ist vorgesehen, dass mit der Mastereinheit zumindest die für die Inbetriebnahme essenziellen Komponenten der Arbeitsmaschine aktiviert und/oder hochgefahren werden.

In anderen Worten können in denkbaren Ausführungsformen eine oder mehrere der genannten Steuerungskomponenten der Maschinensteuerung keine Steuerungskomponenten der Maschinensteuerung sondern Elektrik- und/oder Elektronikkomponenten der Arbeitsmaschinenelektrik sein und/oder eine oder mehrere der genannten Elektrik- und/oder Elektronikkomponenten der Arbeitsmaschinenelektrik keine Elektrik- und/oder Elektronikkomponenten der Arbeitsmaschinenelektrik sondern Steuerungskomponenten der Maschinensteuerung sein. Die Zuweisung der Komponenten zur Maschinensteuerung oder zur Arbeitsmaschinenelektrik kann somit beliebig sein.

## Patentansprüche

1. Arbeitsmaschine mit einer Maschinensteuerung, die eine oder mehrere Steuerungskomponenten aufweist und einer Arbeitsmaschinenelektrik, die eine oder mehrere Elektrik- und/oder Elektronikkomponenten aufweist, wobei Hauptsteuermittel vorgesehen sind, die derart ausgebildet sind, um mindestens eine der Steuerungskomponenten und/oder mindestens eine der Elektrik- und/oder Elektronikkomponenten ansteuern, mit elektrischer Leistung versorgen und/oder aktivieren zu können, **dadurch gekennzeichnet, dass** Aktivierungsmittel vorgesehen sind, die derart ausgebildet sind, um mindestens eine der Steuerungskomponenten aktivieren zu können.

2. Arbeitsmaschine nach Anspruch 1, **dadurch gekennzeichnet, dass** die Aktivierungsmittel eine Aktivierungssteuerung und/oder einen Türkontaktschalter und/oder Mittel zur Überwachung der Umgebung der Arbeitsmaschine und/oder einen Aktivierungsschalter und/oder eine Fernsteuerung und/oder eine Fernbedienung, insbesondere eine Fernbedienung, die zu einer Öffnung einer Tür der Arbeitsmaschine ausgebildet ist, umfassen.

3. Arbeitsmaschine nach Anspruch 1 oder 2, **dadurch gekennzeichnet, dass** die Hauptsteuermittel ein Zündschloss und/oder einen Taster, insbesondere einen Start-Stopp-Taster und/oder eine Fernsteuerung, umfassen.

4. Arbeitsmaschine nach einem der vorhergehenden Ansprüche, **dadurch gekennzeichnet, dass** die Maschinensteuerung als Steuerungskomponenten eine Mastereinheit und/oder eine Peripheriesteuerung und/oder ein Input-/Output-Modul und/oder ein Bedienelement, insbesondere einen Joystick, und/oder eine Tastatur und/oder eine Motorsteuerung und/oder ein Display, insbesondere ein Maschinendisplay und/oder eine Lenkungsenergiesteuerung aufweist.

5. Arbeitsmaschine nach einem der vorhergehenden Ansprüche, **dadurch gekennzeichnet, dass** die Arbeitsmaschinenelektrik als Elektrik- und/oder Elektronikkomponenten eine Spannungsversorgung für Sensoren und/oder Aktoren und/oder einen Scheinwerfer und/oder eine Kabinenheizung und/oder ein Kabinengebläse und/oder einen Scheibenwischer und/oder einen Zigarettenanzünder und/oder eine Hupe und/oder einen Sitzkompressor und/oder eine Heckscheibenheizung und/oder eine Zentralschmieranlage und/oder eine Rückfahrkamera aufweist.

6. Arbeitsmaschine nach einem der vorhergehenden Ansprüche, **dadurch gekennzeichnet, dass** die Hauptsteuermittel und/oder die Aktivierungsmittel derart ausgebildet sind, dass nach einem Ausschaltbefehl zum Beenden der Ansteuerung und/oder Versorgung mit elektrischer Leistung von Komponenten durch die Hauptsteuermittel oder einem Deaktivieren der Hauptsteuermittel entweder für ein einmaliges Öffnen und Schließen des Türkontakts und/oder für eine Zeitdauer, vorzugsweise von unter 10 Minuten, insbesondere von 1 bis 10 Minuten, vorzugsweise 5 Minuten, einen inaktiven Betriebszustand einnehmen, bei dem die Aktivierungsmittel keine Komponenten aktivieren können.

7. Arbeitsmaschine nach einem der vorhergehenden Ansprüche, **dadurch gekennzeichnet, dass** die Aktivierungsmittel, insbesondere die Aktivierungssteuerung, derart ausgebildet sind, dass durch die Aktivierungsmittel aktivierte und/oder hochgefahrene Komponenten nach Ablauf einer Zeitdauer, insbesondere von 5 bis 15 Minuten, vorzugsweise 5 Minuten, deaktiviert werden, wenn innerhalb dieser Zeitdauer keine Ansteuerung und/oder Versorgung mit elektrischer Leistung dieser Komponenten durch die Hauptsteuermittel erfolgt.

8. Arbeitsmaschine nach einem der vorhergehenden Ansprüche, **dadurch gekennzeichnet, dass** die Hauptsteuermittel und/oder die Aktivierungsmittel derart ausgebildet sind, dass nach einem Ausschaltbefehl zum Beenden der Ansteuerung und/oder Versorgung mit elektrischer Leistung von Komponenten durch die Hauptsteuermittel oder einem Deaktivieren der Hauptsteuermittel das Ausschalten mindestens einer Steuerungskomponente oder der Maschinensteuerung erst nachdem ein Bediener und/oder eine Smartkey-Fernbedienung einen definierten Bereich um die Arbeitsmaschine herum verlassen hat, erfolgt.

9. Arbeitsmaschine nach einem der vorhergehenden Ansprüche, **dadurch gekennzeichnet, dass** die die Aktivierungsmittel derart ausgebildet sind, um mindestens eine der Steuerungskomponenten und/oder mindestens eine der Elektrik- und/oder Elektronikkomponenten mit elektrischer Leistung versorgen zu können.

10. Arbeitsmaschine nach einem der vorhergehenden Ansprüche, **dadurch gekennzeichnet, dass** die Aktivierungsmittel derart ausgebildet sind, um mindestens eine der Elektrik- und/oder Elektronikkomponenten aktivieren zu können.

11. Arbeitsmaschine nach einem der vorhergehenden Ansprüche, **dadurch gekennzeichnet, dass** die Arbeitsmaschine eine Erdbewegungsmaschine, insbesondere ein Radlader, ist.

12. Verfahren zur Inbetriebnahme einer Arbeitsmaschine, insbesondere nach einem der vorhergehenden Ansprüche, **dadurch gekennzeichnet, dass** eine Aktivierung mindestens einer der Steuerungskomponenten durch Aktivierungsmittel erfolgt und/oder anschließend eine Ansteuerung und/oder Versorgung mit elektrischer Leistung mindestens einer der Steuerungskomponenten und/oder mindestens einer der Elektrik- und/oder Elektronikkomponenten durch Hauptsteuermittel erfolgt.

13. Verfahren nach Anspruch 12, **dadurch gekennzeichnet, dass** eine Aktivierung einer Mastereinheit, einer Peripheriesteuerung, eines Input-/Output-Moduls, eines Bedienelements, insbesondere eines Joysticks, einer Tastatur, einer Motorsteuerung, eines Displays, insbesondere eines Maschinendisplays und/oder einer Lenkungssteuerung erfolgt.

14. Verfahren nach einem der Ansprüche 12 bis 13, **dadurch gekennzeichnet, dass** die Aktivierung durch ein Öffnen einer Tür und/oder eines Bewegens eines Bedieners und/oder einer Smartkey-Fernbedienung in einen definierten Bereich um die Arbeitsmaschine herum ausgelöst wird.
